# EUROPEAN PATENT SPECIFICATION

(11) **EP 0 869 983 B1**
(45) Date of publication and mention of the grant of the patent: **29.05.2002**
(21) Application number: 96943461.2
(22) Date of filing: 19.12.1996
(51) Int. Cl.: C08G 63/06, C08G 63/20, C08G 63/47, C08G 63/60, C08L 67/04, C08L 67/08

(54) **BRANCHED EPOXIDE FUNCTIONAL POLYESTER**
VERZWEIGTER EPOXYFUNKTIONELLER POLYESTER
POLYESTER EPOXYDE FONCTIONNEL RAMIFIE

(30) Priority: 22.12.1995 SE 9504652
(43) Date of publication of application: 14.10.1998
(73) Proprietor: PERSTORP AB, 284 80 Perstorp (SE)
(72) Inventor: PETTERSSON, Bo, S-224 72 Lund (SE)
(74) Representative: Hansen, Bernd, Dr. Dipl.-Chem.
(86) International application number: PCT/SE96/01710
(87) International publication number: WO 97/23538

(56) References cited:
- WO-A-93/17060
- WO-A-96/12754

## Description

The present invention relates to a resin composition comprising a highly branched epoxide functional polyester, wherein the cyclic three-membered epoxide (oxirane, 1,2-epoxide, α-epoxide, oxido) ring is introduced by addition of at least one epoxide functional monomer or polymer to terminal hydroxyl groups in a prepolymer obtainable by condensing at least one hydroxyfunctional monocarboxylic acid. The epoxide functional polyester of the invention has, contrary to ordinary randomly branched epoxide functional polyesters, a controlled branching and a structure wherein all introduced epoxide groups substantially are pointed in the same molecular direction. The invention refers in a further aspect to thermoset materials produced from said resin composition.

Epoxy resins and epoxy ester resins are well-known and have been manufactured for a very long time. Resins obtained from epihalohydrins, such as epichlorohydrin, by its reaction with hydroxyl or carboxyl containing compounds, such as phenols, alcohols, carboxylic acids and hydroxy or carboxyfunctional esters, polyesters, ethers or polyether. Phenols, alcohols and hydroxyfunctional esters or polyesters are of particular merit. A further class of such resins can be exemplified by epoxides obtained by epoxidation of compounds having oxidizable olefinic or aromatic double bonds, such as unsaturated carboxylic acids and unsaturated esters, polyesters, ethers or polyethers. Compounds of particular merit are here unsaturated carboxylic acids designated as fatty acids and unsaturated esters or polyesters.

Epoxide functional polyesters are accordingly produced from linear and branched saturated or unsaturated polyesters mainly by the two methods outlined below
1) Epoxidation, using an epoxidation agent such as a peroxyacid or hydrogen peroxide, of unsaturation within a polyester. Numerous procedures are available for carrying out the epoxidation, but the most widely used procedure is by far the direct epoxidation of unsaturated compounds with organic peroxy acids according to below schematic reaction schedule wherein the epoxidation agent is a peroxyacid 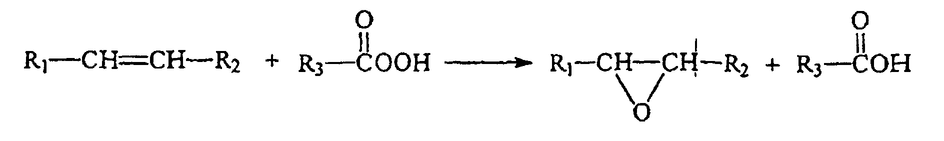 the substituents R₁ - R₃ in above formula are for instance:
   R₁ - an aliphatic or aromatic polyester moiety, which optionally may be hydroxy and/or carboxyfunctional,
   R₂ - hydrogen, an alkyl moiety, an aryl moiety or R₁, and
   R₃ - hydrogen, an alkyl moiety or a haloalkyl moiety.
2) Reaction between unreacted hydroxyl or carboxyl groups in the polyester and an epihalohydrin. The by far most commonly used epihalohydrin is epichlorohydrin yielding glycidyl ethers and esters according to below schematic reaction schedule wherein a glycidyl ether is yielded 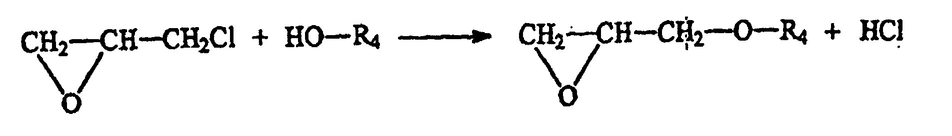 the substituent R₄ is for example an aliphatic or aromatic polyester moiety, which may hold one or more additional hydroxyl groups and optionally one or more carboxyl groups.

Various epoxy resins and epoxidation procedures are thoroughly disclosed and discussed in available literature on chemical as well as polymer science and technology, such as Kirk-Ottmer, "Encyclopedia of Chemical Technology" - Wiley-Interscience Publication, 1980. vol. 9, pp. 251-290 "Epoxidation" and pp. 267-290 "Epoxy Resins". Further disclosures can be found in for instance "Encyclopedia of Polymer Science and Technology" - John Wiley & Sons, Inc. 1967, vol. 6 pp. 83-270 "Epoxidation", pp. 196-209 "1,2-Epoxide Polymers" and pp. 209-271 "Epoxy Resins".

Ordinary branched epoxide functional polyesters exhibit many good properties but are also submitted to some drawbacks related to for instance rheological properties and ratio between viscosity and molecular weight. A branched epoxide functional polyester is normally a high molecular and randomly branched compound with a broad dispersivity and exhibits due to this a very high viscosity in relation to its molecular weight.

A further class of thermo setting molecules, namely dendritic macromolecules of the polyester type, which may be functionalised such as epoxidized, are disclosed in WO 93/17060. These macromolecules are based on a monomeric or polymeric central initiator or nucleus having one or more reactive groups.

It has quite unexpectedly been found that well-known drawbacks related to ordinary branched epoxide functional polyesters can be solved or reduced by a branched epoxide functional polyester,
wherein the branching density and structure are highly controlled and easily reproduced. Epoxide functional polyesters having a high molecular weight and a high and degree of branching, which are necessary to give good performance characteristics, as well as having so low a viscosity that they can be used without or with only a minor addition of diluting solvents, monomers or other diluting compounds can be obtained.

The epoxide functional branched polyester included in the present invention is yielded from a prepolymer having at least one carboxyl group and *m* hydroxyl groups, whereby *m* is an integer and at least 3, such as 3, 4, 5, 6, 8, 10, 16 or 32. The prepolymer is a condensation product obtainable by condensing at least one monomer selected from the group consisting of di, tri and polyhydroxyfunctional monocarboxylic acids having 2-18 carbon atoms. The yielded condensation product is said prepolymer or can be used as an intermediate condensation product for optional further chain extension by addition of at least one monohydroxyfunctional monocarboxylic acid or an inner ether thereof, a lactone, having 2-24 carbon atoms. The optional addition of a monohydroxyfunctional monocarboxylic acid is performed by esterification at a molar ratio intermediate condensation product to said monohydroxyfunctional monocarboxylic acid of 1:1 to at least 1:*m*. The prepolymer, the condensation product with or without the optional further chain extension. The prepolymer is made epoxide functional by:
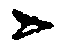 reaction between at least one of said hydroxyl groups in the prepolymer and at least one monomeric or polymeric compound having at least one epoxide group and thus providing said prepolymer with said epoxide group. Suitable compounds are for instance haloalkyl oxiranes, preferably halomethyl oxiranes such as epichlorohydrin. The reaction is performed at a molar ratio prepolymer to said monomeric or polymeric compound of 1:1 to at least 1:*m*.
or by:
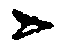 addition of at least one unsaturated compound having at least one oxidizable unsaturation, which unsaturation by employing at least one oxidizing agent is epoxidized, the addition being performed at a molar ratio prepolymer to said unsaturated compound of 1:1 to at least 1:*m*.
A branched epoxide functional polyester having at least one primary or secondary epoxide group is thus yielded.

The epoxide functional polyester included in the present invention is advantageously used as a resin modifier or additive, such as a rheology modifier, for instance providing pseudoplastic properties, tixotrophy, improved flowability, reduced sagging and the like. The epoxide functional polyester can furthermore be used to adjust the shear rate of a resin composition, a coating or the like and can of course be used as sole resin in a for instance a coating or other type of resinous composition.

Through the present invention it has been possible to produce for instance a thermosetting material, such as a composite or a coating, wherein the thermosetting resin matrix has increased toughness properties without, or only thermosetting resin matrix has increased toughness properties without, or only slightly altering processability, thermal and other mechanical properties. The resin matrix is based on the epoxide functional polyester disclosed above combined with ordinary thermosetting resins. Thermosetting materials such as composites are used in a wide variety of applications, each requiring specific properties from included components. The versatility of material property design and processing possibilities with thermosetting composite materials have been and will remain a major driving force for the use thereof. However, certain drawbacks still remain. Among these are some properties related to the mechanical anisotropy and often relatively high processing costs. The mechanical properties are mainly influenced by the properties, for instance the toughness, of the resin matrix. The matrix toughness is one of the most important intrinsic properties of a thermosetting material, such as a composite, controlling various observable damages and failure mechanisms. The toughening properties of the epoxide functional polyester disclosed above are excellent and most important, toughening can be obtained without imparting the matrix modulus or the thermal properties. Some important applications areas of thermosetting composites, wherein the resin matrix advantageously comprises the epoxide functional polyester disclosed above , include aeronautic goods and articles, nautic goods and articles, chemicals/chemical goods and articles, automotive goods and articles, sporting goods and articles, leisure/commodity goods and articles and electric/electronic goods and articles.

The epoxide functionality of the polyester disclosed above can be adapted to any resin system to provide appropriate number and location of the reactive epoxide groups. The epoxide functional polyester is therefore not as sensitive to different resin and matrix chemistry as for instance ordinary epoxide functional compounds, which often require a modification of the entire resin or matrix chemistry. The epoxide functional polyester enhances filmproperties quite different from corresponding properties obtained by ordinary epoxide functional polyesters as well as different from conventional molecules of epoxy type. The structure of the epoxide functional polyester included in the present invention impart markedly increased surface properties, such as curing time, hardness and scratch resistance.

The di, tri or polyhydroxyfunctional monocarboxylic acid of the prepolymer is preferably selected from the group consisting of dihydroxy, di(hydroxymethyl), trihydroxy and tri(hydroxymethyl) monocarboxylic acids having said 2-18 carbon atoms. These hydroxyfunctional acids can suitably be exemplified by 2,2-dimethylolpropionic acid, α,α-bis(hydroxymethyl)butyric acid, α,α,α-tris(hydroxymethyl)acetic acid, α,α-bis(hydroxymethyl)valeric , acid, α,α-bis(hydroxy)propionic acid, α,β-dihydroxypropionic acid and mixtures thereof or therewith. Suitable hydroxyfunctional monocarboxylic acids are, furthermore, aromatic acids such as 3,5-dihydroxybenzoic acid and polyhydroxyfunctional acids such as heptonic acid. The optional monohydroxyfunctional monocarboxylic acid or lactone, having said 2-24 carbon atoms, of the prepolymer is in these preferred embodiments suitably selected from the group consisting hydroxyacetic acid, hydroxyvaleric acid, hydroxypropionic acid, hydroxypivalic acid, hydroxystearic acid, glycolide, δ-valerolactone, β-propiolactone, ε-caprolactone and mixtures thereof or therewith.

An unsaturated compound having at least one oxidizable unsaturation, as disclosed above, is preferably selected from the group consisting of
i) allylhalids, such as allyl chloride and/or allyl bromide, whereby the addition is performed by reaction between said allylhalid and at least one hydroxyl group in the prepolymer followed by epoxidation employing said oxidizing agent,
ii) adducts between at least one di, tri or polyfunctional carboxylic acid or anhydride having 3-30 carbon atoms and at least one mono, di, tri or polyalcohol, whereby said adduct has at least one ethylenic unsaturation derived from the acid and/or the alcohol, which ethylenic unsaturation by employing said oxidizing agent is epoxidized and whereby the addition is performed by esterification,
iii) aliphatic or cycloaliphatic unsaturated monocarboxylic acids having 3-30 carbon atoms and at least one oxidizable unsaturation which by employing said oxidizing agent is epoxidized, whereby the addition is performed by esterification.

The unsaturated monocarboxylic acid having said 3-30 carbon atoms is in preferred embodiments selected from the group consisting of Δ5,6-decenoic acid, Δ9,10-decenoic acid, Δ10,11-undecenoic acid, Δ9,10-dodecenoic acid, Δ5,6-tetradecenoic acid, Δ9,10-tetradecenoic acid, Δ9,10-hexadecenoic acid, Δ6,7-octadecenoic acid, Δ9,10-octadecenoic acid, Δ11,12-octadecenoic acid, 12-hydroxy-Δ9,10-octadecenoic acid, Δ9,10-eicosenoic acid, Δ11,12-eicosenoic acid, Δ11,12-docosenoic acid, Δ13,14-docosenoic acid, Δ15,16-tetracosenoic acid, Δ17,18-hexacosenoic acid, Δ21,22-tricosenoic acid, Δ9,10,12,13-octadecadienoic acid, Δ6,7,10,11,14,15-hexadecatrienoic acid, Δ9,10,11,12,13,14-octadecatrienoic acid, Δ9,10,12,13,15,16-octadecatrienoic acid, Δ9,10,11,12,13,14-octadecatrienoic acid, 4-oxo-Δ9,10,11,12,13,14-octadecatrienoic acid, 4-keto-Δ9,10,11,12,13,14-octadecatrienoic acid, Δ9,10,11,12,13,14,15,16-octadecatetraenoic acid, Δ5,6,8,9,11,12,14,15-eicosatetraenoic acid, Δ4,5,8,9,12,13,15,16,19,20-docosa pentaenoic acid, Δ4,5,8,9,12,13,15,16,18,19,21,22-tetracosahexaenoic acid and mixtures thereof or therewith. Said unsaturated monocarboxylic acid is, in especially preferred embodiments acrylic acid, methacrylic acid, crotonic acid (β-methacrylic acid), lauroleic acid, myristoleic acid, palmitoleic acid, oleic acid, elaidic acid, gadoleic acid, euric acid, cetoleic acid, selacholeic acid, hiragonic acid, linoleic acid, linolenic acid, elaeostearic acid and mixtures thereof or therewith. The so called fatty acids having said unsaturation is of special merit and can suitably be exemplified by soybean fatty acid, linseed fatty acid, tall oil fatty acid, tung oil fatty acid, sunflower fatty acid, safflower fatty acid and mixtures thereof or therewith.

The unsaturated monocarboxylic acid having said 3-30 carbon atoms can suitably be included in a mixture of acids comprising, in addition to said unsaturated monocarboxylic acid, at least one saturated linear or branched aliphatic monocarboxylic acid having 1-30 carbon atoms and/or at least one aliphatic saturated or unsaturated di, tri or polycarboxylic acid having 3-30 carbon atoms. The esterification is in such embodiments preferably performed at a molar ratio prepolymer to said unsaturated monocarboxylic acid of at least 1:1. The saturated monocarboxylic acid having said 1-30 carbon atoms can be exemplified by acids such as formic acid, acetic acid, trimethylacetic acid, propionic acid, isopropanoic, butyric acid, isobutyric, valeric acid, caproic acid, hexanoic acid, 2-ethylhexanoic acid, octanoic acid, heptanoic acid, pelargonic acid, nonanoic acid, capric acid, nonanoic acid, lauric acid, myristic acid, palmitic acid, stearic acid, behenic acid, lignoceric acid, cerotic acid, montanoic acid, coconut fatty acid, dehydrated caster fatty acid and the aliphatic saturated or unsaturated di, tri or polycarboxylic acid by maleic acid or anhydride, fumaric acid, adipic acid, azelaic acid, succinic acid or anhydride, sebacic acid, diglycolic acid and mixtures thereof or therewith.

An oxidizing agent as used for epoxidation of said unsaturated compound, having said at least one oxidizable unsaturation, is preferably a peroxy acid or anhydride, a haloperoxy acid or anhydride or is a hydroperoxide optionally combined with at least one transition metal ion, such as a molybdenum, tungsten, chromium, vanadium and/or silver ion. The most preferred oxidizing agents are suitably exemplified by peroxyformic acid, peroxyacetic acid, peroxybenzoic acid, m-chloroperoxybenzoic acid, trifluoroperoxyacetic acid or mixtures thereof or therewith.

Peroxy and haloperoxy acids can be used as preformed products or be formed *in situ* during said epoxidation. Hydrogen peroxide is a major source of active hydrogen in the preparation of peroxy and haloperoxy acids. Peracetic acid is for instance formed in high yield by the equilibrium reaction of 30-98% hydrogen peroxide with acetic acid. Many techniques of *in situ* epoxidation are available. In general, a peroxide solution, such as 35-70% hydrogen peroxide in water, containing small quantities of a mineral acid, such as sulphuric or phosphoric acid, is added to a mixture of an epoxidizable substrate and a lower organic acid, such as acetic acid or a haloacetic acid. As the reactants mix, the hydrogen peroxide and the organic acid react in the presence of the mineral acid catalyst to form the peroxy or haloperoxy acid as illustrated by below reaction schedule 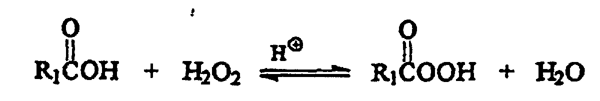 wherein R₁ is hydrogen, lower alkyl or haloalkyl.

The present invention relates to a resin composition comprising, in addition to the epoxide functional polyester disclosed above , at least one conventional aliphatic, cycloaliphatic or aromatic monomeric or polymeric compound or resin in an amount of 1-99%, such as 10-90% or 20-80% and preferably 25-75% or 50-95%, by weight, and optionally at least one curing agent, catalyst, inhibitor, stabilizer, solvent and/or property adjusting additive.

The epoxide functional polyester disclosed above can suitably participate in the production of a polymeric or resinous composition as modifier providing previously disclosed advantages and properties. Furthermore, the epoxide functional polyester is, also as previously disclosed, advantageously used to produce a thermosetting material, such as a composite, wherein the thermosetting resin matrix has increased toughness properties without, or only slightly altering processability, thermal and other mechanical properties.

The resin composition of the present invention is preferably a composition selected from the group consisting of
i) a binder composition for coating systems;
ii) a thermosetting resin composition;
iii) a thermoplastic resin composition;
iv) an adhesive composition;
v) a microlithographic coating or resist;
vi) a composite reinforced with glass, aramid or carbon/graphite fibres; and
vii) a dental material.

A conventional compound or resin is in preferred embodiments an ordinary monomeric or polymeric epoxide, optionally being rubber modified, such as an epoxide of general formula 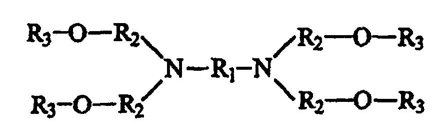 wherein R₁ is cycloalkanyl, branched cycloalkanyl, aryl, branched aryl, linear or branched alkanylaryl, R₂ independently is linear or branched alkanyl, alkenyl or alkynyl, and R₃ independently is H or 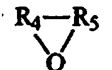 wherein R₄ is CH or C₂ - C₁₀ linear or branched alkanyl, alkenyl or alkynyl, and R₅ is CH₂ or C₂ - C₁₀ linear or branched alkanyl, alkenyl or alkynyl, whereby at least one substituent R₃ is 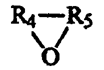 or an epoxide of general formula R₃-O-R₂-R₁-R₂-O- R₃ wherein R₁ is cycloalkanyl, branched cycloalkanyl, aryl, branched aryl, linear or branched alkanylaryl, R₂ independently is NH, linear or branched alkanyl, alkenyl or alkynyl, and R₃ independently is H or 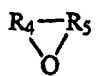 wherein R₄ is CH or C₂ - C₁₀ linear or branched alkanyl, alkenyl or alkynyl, and R₅ is CH₂ or C₂ - C₁₀ linear or branched alkanyl, alkenyl or alkynyl, whereby at least one substituent R3 is

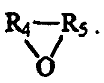

The conventional epoxide, included in the resin composition of the present invention, is in some preferred embodiments selected among glycidyl ethers of condensation products between at least one phenol and at least one aldehyde or oligomers of such condensation products or glycidyl ethers of condensation products between at least one phenol and at least one ketone or oligomers of such condensation products. These products can be exemplified by products such as bisphenol A-diglycidyl ether.

The resin composition comprises in certain embodiments and in addition to said components at least one dendritic or hyperbranched macromolecule. The dendritic or hyperbranched macromolecule is composed of a monomeric or polymeric nucleus having at least one reactive epoxide or hydroxyl group to which 1-100, preferably 1-20, generations of at least one monomeric or polymeric chain extender having at least two reactive hydroxyl groups and at least one reactive carboxyl group or at least two reactive carboxyl groups and at least one reactive hydroxyl group is added, whereby a macromolecule having substantially hydroxyl or carboxyl groups as terminal functions is yielded, which macromolecule optionally by addition, to at least one of said terminal functions, of at least one monomeric or polymeric compound is provided with at least one primary or secondary epoxide, amino, alkenyl or anhydride group.

In a further aspect, the present invention refers to a thermosetting material made from said resin composition. The thermosetting material is cured or partially cured and the material comprises in addition to said resin composition optionally at one filler, pigment, lubricant and/or reinforcement material, such as fibres in the form of webs, cloths, sheets, threads or cut fibres. Said fibres are preferably and advanteously selected from glass fibres, graphite/carbon fibres, aramide fibres and/or organic fibres, such as cellulose.

Various embodiments of the thermosetting material include for example moulding powders, decorative or industrial laminates and so called prepregs obtained by a partial curing to a so called B-stage of rolls, sheets, webs, cloths, threads or cuttings impregnated with the thermosetting resin composition. Curing of at least one such prepreg can yield a decorative or industrial laminate. Further suitable embodiments include protective and decorative coatings, such as primers or top coats, adhesives and glues.

The thermosetting material according to the invention is preferably used in the production of semi-finished and finished goods and articles selected from the group consisting of aeronautic goods and articles, nautic goods and articles, chemicals and chemical goods and articles, automotive coatings, automotive goods and articles, sporting goods and articles, leisure and commodity goods and articles and electric and electronic goods and articles. Said semi-finished or finished goods or articles are sutably produced using processing techniques such as resin immersion or infusion, compression transfer, vacuum moulding; transfer moulding, injection moulding, gas assisted injection moulding, structural injection moulding, filament winding, extrusion, rotary moulding, gravity moulding and blow moulding and at least one surface of the semi-finished or finished thermosetting material of the present invention can in certain embodiments suitably be metal plated or metal clad.

A process for preparation of the prepolymer, made epoxide functional as disclosed above, is suitably a process in one or more steps. A preferred process can be exemplified as follows:
a) condensing a branching chain extender with further molecules of the same chain extender and/or with further molecules of at least one other branching chain extender, which branching chain extenders have at least three reactive sites of which one is a carboxyl group and at least two are hydroxyl groups, the condensation being performed at a reaction temperature of 0-300°C. preferably 50-250°C, and in an amount yielding a prepolymer having at least three hydroxyl groups; and optionally
b) condensing the prepolymer of Step (a) with further molecules of said branching chain extenders or with at least one spacing chain extender having one reactive carboxyl and one reactive hydroxyl group, the condensing being performed at a reaction temperature of 0-300°C, preferably 50-250°C, and in an amount or in a number of steps at least equal to requested chain extension.

The condensation can normally be carried out without using a catalyst. A catalyst is, however, often used and preferred in many cases and is then suitably selected from the group consisting of:
i) a Brønsted acid;
ii) a Lewis acid;
iii) a titanate;
iv) metallic zinc or an organic or inorganic zinc compound;
v) metallic tin or an organic or inorganic tin compound;
vi) metallic lithium or an organic or inorganic lithium compound; and
vii) triphenylphosphine or a derivative thereof.

These and other objects and the attendant advantages will be more fully understood from the following detailed description, taken in conjunction with embodiment Examples 1-10 and Table 1, wherein:
- Example 1:: Preparation of a prepolymer from 2,2-dimethylolpropionic acid.
- Example 2:: Preparation of secondary epoxidized polyester from the prepolymer of Example 1.
- Example 3:: Preparation of primary epoxidized polyester from the prepolymer of Example 1.
- Example 4:: Preparation of a thermosetting resin composition comprising the epoxide functional polyester of Example 2.
- Example 5:: Comparative Example - Preparation of a thermosetting resin composition comprising only conventional thermosetting resins outside the scope of the invention.
- Example 6:: Preparation by moulding of thermosetting materials based on the thermosetting compositions of Examples 4 and 5.
- Example 7-10:: Evaluations of the thermosetting materials prepared by moulding according to Example 6.
- Table 1:: Results from evaluations according to Examples 7-10.

### Example 1

1230.84 g (9.18 moles) of 2,2-dimethylolpropionic acid was charged in a 4-necked reaction flask equipped with stirrer, pressure gauge, cooler and receiver. The temperature was during 30 minutes raised from room temperature to 145°C at which temperature a clear solution was obtained. 9.85 g of *p*-toluene sulphonic acid were then added and a vacuum of 10 mm Hg was applied. The reaction was thereafter under said conditions and stirring allowed to continue for a further 360 minutes until an acid value of 16-17 mg KOH/g was reached.

Obtained prepolymer exhibited the following properties:

| | |
|---|---|
| Final acid value, mg KOH/g | 14.4 |
| Hydroxyl value, mg KOH/g | 494 (theoretical value: 496) |
| Molecular weight, g/mole | 3963 (theoretical value: 3618) |

### Example 2

### Step 1:

297.72 g of the prepolymer of Example 1, 227.96 g (0.83 mole) of oleic acid, 135.15 g (0.91 mole) of a mixture of caproic and caprylic acid and 26.4 g of heptane (azeotropic solvent) were charged in a 4-necked reaction flask equipped with stirrer, nitrogen inlet, cooler and water trap (Dean-Stark). The temperature was during 35 minutes raised from room temperature to 150°C. The reaction was under stirring thereafter allowed to continue for a further 135 minutes until an acid value of ≈ 10 mg KOH/g was reached. Full vacuum was now applied to remove residual heptane.

Obtained intermediate product having secondary ethylenic unsaturations exhibited the following properties:

| | |
|---|---|
| Final acid value, mg KOH/g | 9.6 |
| Hydroxyl value, mg KOH/g | 81 |
| Theoretical molecular weight, g/mole | 7562 |
| Theoretical unsaturation, g I₂/100 g | 33 |
| Obtained unsaturation, g I₂/100 g | 33 |
| Viscosity at 23°C, mPas | 76200 |
| Non-volatile content, % | 99.6 |

### Step 2

185.20 g of the in Step 1 obtained product and 120.38 g of xylene were charged in a 4-necked reaction flask equipped with stirrer, nitrogen inlet and cooler. The temperature was during 15 minutes raised from room temperature to 50°C. 7.41 g of Dowex® M3 ion-exchanger, 10.44 g (0.17 mole) of acetic acid and 23.65 g of H₂O₂ (50% aq) were thereafter added and the reaction was allowed to continue for 600 minutes, after which time the reaction solution was cooled. The ion-exchanger was thereafter removed by filtration and the filtrate was centrifuged in a Hereaus Christ centrifuge to remove the aqueous phase. After removal of the aqueous phase, obtained organic phase was washed several times with pure water followed by centrifugation according to previous mentioned procedure to remove residual peroxide and acetic acid. The solvent was, when the washing step was completed, removed on a roll-evaporator at 50°C whereby the final product was obtained.

The branched secondary epoxide functional polyester exhibited the following properties:

| | |
|---|---|
| Theoretical epoxide functionality, eq | 9.92 |
| Theoretical molecular weight, g/mole | 7720 |
| Theoretical epoxy equivalent weight, g/eq | 778 |
| Obtained epoxy equivalent weight, g/eq | 882 |
| Final acid value, mg KOH/g | 8.3 |
| Viscosity, Brookfield, 23°C, mPas | 102 000 |
| Non-volatile content, % | 98.1 |

### Example 3

### Step 1

302.28 g of the prepolymer of Example 1, 363.62 g (1.97 moles) of undecenoic acid and 26.6 g of heptane (azeotropic solvent) were charged in a 4-necked reaction flask equipped with stirrer, nitrogen inlet, cooler and water trap (Dean-Stark). The temperature was during 45 minutes raised from room temperature to 150°C. The reaction was under stirring thereafter allowed to continue for a further 210 minutes until an acid value of ≈ 10 mg KOH/g was reached. Full vacuum was now applied to remove residual heptane.

Obtained intermediate product having primary ethylenic unsaturations exhibited the following properties:

| | |
|---|---|
| Final acid value, mg KOH/g | 9.2 |
| Hydroxyl value, mg KOH/g | 62 |
| Theoretical molecular weight, g/mole | 8024 |
| Theoretical unsaturation, g I₂/100 g | 81 |
| Obtained unsaturation, g I₂/100 g | 78 |
| Viscosity at 23°C, mPas | 73 800 |
| Non-volatile content, % | 99.3 |

### Step 2

158.92 g of the in Step 1 obtained product and 103.3 g of xylene were charged in a 4-necked reaction flask equipped with stirrer, nitrogen inlet and cooler. The temperature was during 15 minutes raised from room temperature to 50°C. 6.36 g of Dowex® M3 ion-exchanger, 22.10 g (0.37 mole) of acetic acid and 49.86 g of H₂O₂ (50% aq) were thereafter added and the reaction was allowed to continue for 600 minutes, after which time the reaction solution was cooled. The ion-exchanger was thereafter removed by filtration and the filtrate was centrifuged in a Hereaus Christ centrifuge to remove the aqueous phase. After removal of the aqueous phase, resulting organic phase was washed several times with pure water, followed by centrifugation according to previous mentioned procedure to remove residual peroxide and acetic acid. The solvent was, when the washing step was completed, removed on a roll-evaporator at 50°C whereby the final product was obtained.

The branched primary epoxide functional polyester exhibited the following properties:

| | |
|---|---|
| Theoretical epoxide functionality, eq | 24 |
| Theoretical molecular weight, g/mole | 7920 |
| Theoretical epoxy equivalent weight, g/eq | 330 |
| Obtained epoxy equivalent weight, g/eq | 426 |
| Viscosity, Brookfield, 23°C, mPas | 225 000 |
| Non-volatile content, % | 99.2 |

### Example 4

A thermosetting resin composition was prepared by mixing the product according to Example 2 with a commercial epoxide of bisphenol-F type (Araldite® LY5082, Ciba-Geigy, Switzerland) having an average functionality of two and a commercial isophorone diamine curing agent (Hardener HY5083, Ciba-Geigy, Switzerland) having a functionality of four. The components were mixed at 23°C using mechanical stirring for 5 minutes. The resin was subsequently degassed at room temperature in a vacuum chamber at 0.1 bar for 10 minutes.

The resin composition had the following formulation and properties:

| | |
|---|---|
| Product according to example 2, g | 5.0 |
| Commercial epoxide, g | 95.0 |
| Curing agent, g | 21.5 |
| | |
| Amine:epoxide (molar ratio) | 1:1 |
| Non-volatile content, % | 100.0 |

### Example 5 - (Comparative Example)

A thermosetting resin composition was prepared by mixing a commercial epoxide of bisphenol-F type (Araldite® LY5082, Ciba-Geigy, Switzerland) having an average functionality of two with a commercial isophorone diamine curing agent (Hardener HY5083, Ciba-Geigy, Switzerland) having a functionality of four. The components were mixed at 23°C using mechanical stirring for 5 minutes. The resin was subsequently degassed at room temperature in a vacuum chamber at 0.1 bar for 10 minutes.

The resin composition had the following formulation and properties:

| | |
|---|---|
| Commercial epoxide, g | 100.0 |
| Curing agent, g | 23.0 |
| | |
| Amine:epoxide (molar ratio) | 1:1 |
| Non-volatile content, % | 100.0 |

### Example 6

Thermosetting resin compositions according to Examples 4-5 were at 23°C poured into steel moulds having the internal dimensions 110 x 27 x 2.5 mm and 27 x 25 x 10 mm, respectively. The moulds were pre-treated with a silicone based mould release agent. The resin compositions were cured in the moulds, resulting in moulded plastic specimens having dimensions equal to the internal dimensions of the moulds. Curing was performed in an oven with circulating air and according to below schedule:

| | |
|---|---|
| Heating | 23-80°C, gradient 3°C/min |
| Curing | 80°C during 900 minutes |
| Cooling | 80-23°C, gradient 6°C/minute |

### Example 7

Samples were cut out from the plastic specimens produced from the resin compositions of Examples 4-5, which resin compositions were moulded and cured according to Example 6. Cutting was made by a rotating saw blade and the edges of the samples were polished with a 240 grid sand paper and rinsed with demineralised water. The samples were subsequently dried and aged at 23°C for at least 7 days. Chips were, using a razor blade, prior to testing cut from the samples.

The glass transition temperatures (T_{g}) were recorded on a Jerkin-Elmer DCS7 (Differential Scanning Calorimeter) apparatus using the following parameters:

| | |
|---|---|
| Average sample weight, mg | 20 |
| Temperature range, °C | 0-130 |
| Heating gradient, °C/min | 10 |
| Cooling gradient, °C/min | 150 |
| Stabilization time at 0°C, min | 5 |
| Heating gradient, °C/min | 10 |

Obtained results are given in Table 1.

### Example 8

Samples having the dimensions 100 x 12 x 2.5 mm were cut from the plastic specimens obtained from the resins compositions according to Examples 4-5, which specimens were moulded and cured in 110 x 27 x 2.5 mm moulds according to Example 6. Cutting was made by a rotating saw blade and the edges of the samples were polished with a 400 grid sand paper.

The tensile modulus (E) was recorded on a Zwick Screw tensile testing apparatus equipped with an extensometer.

The following parameters were used:

| | |
|---|---|
| Extensometer gauge length, mm | 35 |
| Length between grips, mm | 70 |
| Crosshead rate, mm/min | 2 |

Obtained results are given in Table 1:

### Example 9

Samples were, using a rotary saw blade, cut from the plastic specimens produced from the resin compositions according to Examples 4-5 which compositions were moulded and cured in 27 x 25 x 10 mm mould in accordance with Example 6. The samples were cut to the exterior dimensions 25 x 25 x 10 mm and machined for compact tension tests according to ASTM E399.

Critical Stress Intensity Factor (K_{1c}) according to ASTM E399 were recorded on a Zwick Screw tensile testing apparatus using a crosshead rate of 0.5 mm/min.

Obtained results are given in Table 1.

### Example 10

The fracture energy, expressed as G_{1c}, were determined from the results obtained in Examples 8 and 9 according to the following equation: 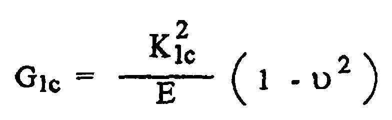 wherein
- G_{1c} =: Fracture Energy (J/m²)
- K_{1c} =: Critical Stress Intensity Factor (MPa.m^{½})
- E =: Tensile Modulus (GPa)
- *v* =: Poisson Ratio

Obtained results are given in Table 1.

**Table 1**

| Results obtained in Examples 7-10. | | |
|---|---|---|
| **Moulded material** | **Example 4** | **Example 5** |
| T_{g}, °C | 80 | 84 |
| E, GPa | 2.9 | 3.0 |
| K_{1c}, MPa.m^{½} | 1.37 | 0.62 |
| G_{1c}, J/m² | 589 | 110 |

Table 1 illustrates the benefits in mechanical properties using moulded materials based on thermosetting compositions according to the invention as opposed to non-modified materials. The present invention is thus of signifcant importance in the quest for improved mechanical properties in for instance thermosetting materials. An extensive toughening effect can be reached with the claimed invention compared to non-modified materials. There is further no major negative effect in other critical properties such as tensile modulus and glass transition temperature which otherwise often is the case when conventional tougheners are used.

## Claims

1. A thermosetting resin composition comprising at least two thermosetting resins and optionally in addition thereto at least one curing agent, catalyst, inhibitor, stabiliser, solvent and/or property adjusting additive, of which thermosetting resins at least one is a branched epoxide functional polyester having at least one primary or secondary epoxide group and at least one carboxyl group, said epoxide functional polyester being obtainable from a prepolymer having at least one carboxyl group and *m* hydroxyl groups, *m* being an integer and at least 3, which prepolymer is a condensation product obtained by condensing at least one monomer selected from the group consisting of di, tri or polyhydroxyfunctional monocarboxylic acids having 2-18 carbon atoms, optionally followed by further chain extension by addition of at least one monohydroxyfunctional monocarboxylic acid or lactone having 2-24 carbon atoms, said addition being performed at a molar ratio condensation product to monohydroxyfunctional monocarboxylic acid of 1:1 to at least 1:*m*, which prepolymer is made epoxide functional by
a) reaction between at least one of said hydroxyl groups in the prepolymer and at least one monomeric or polymeric compound providing said prepolymer with at least one epoxide group, the reaction being performed at a molar ratio prepolymer to said compound of 1:1 to at least 1:*m*, or by
b) addition of at least one unsaturated compound having at least one oxidisable unsaturation, which unsaturation by employing at least one oxidising agent is epoxidised, the addition being performed at a molar ratio prepolymer to said unsaturated compound of 1:1 to at least 1:*m*,
and of which thermosetting resins at least one is a conventional aliphatic, cycloaliphatic or aromatic polymeric epoxide, said conventional polymeric epoxide being present in an amount of 1-99% by weight, preferably 50-95% by weight.

2. A thermosetting resin composition according to Claim 1, wherein said di, tri or polyhydroxyfunctional monocarboxylic acid is 2,2-dimethylolpropionic acid, α,α-bis(hydroxymethyl)butyric acid, α,α,α-tris(hydroxymethyl)acetic acid, α,α-bis(hydroxymethyl)valeric acid, α,α-bis(hydroxy)propionic acid, α,β-dihydroxypropionic acid and/or 3,5-dihydroxybenzoic acid.

3. The thermosetting resin composition according to Claim 1 or 2, wherein said monomeric or polymeric compound providing the prepolymer with at least one epoxide group is selected from the group consisting of haloalkyl oxiranes.

4. The thermosetting resin composition according to Claim 3, wherein said haloalkyl oxirane is a halomethyl oxirane, such as epichlorohydrin.

5. A thermosetting resin composition according to Claim 1 or 2, wherein said unsaturated compound having at least one oxidizable unsaturation is an aliphatic or cycloaliphatic unsaturated monocarboxylic acid having 3-30 carbon atoms and at least one oxidizable unsaturation which unsaturation by employing said oxidizing agent is epoxidized, said addition being performed by esterification.

6. A thermosetting resin composition according to Claim 1 or 2, wherein said oxidizing agent is a peroxy and/or haloperoxy acid or anhydride.

7. A thermosetting resin composition according to any of the Claims 1-6, wherein said thermosetting resin composition comprises at least one glycidyl ether of a condensation product between at least one phenol and at least one aldehyde or ketone or an oligomer of such a condensation product.

8. A thermosetting resin composition according to any of the Claims 1-7, wherein said thermosetting resin composition in addition to said components comprises at least one dendritic or hyperbranched macromolecule composed of a monomeric or polymeric nucleus having at least one reactive epoxide or hydroxyl group to which 1-100, preferably 1-20, generations consisting of at least one monomeric or polymeric chain extender having at least two reactive hydroxyl groups and at least one reactive carboxyl group or at least two reactive carboxyl groups and at least one reactive hydroxyl group is added, whereby a macromolecule having substantially hydroxyl or carboxyl groups as terminal functions is yielded, which macromolecule optionally by addition, to at least one of said terminal functions, of at least one monomeric or polymeric compound is provided with at least one primary or secondary epoxide, ammo, alkenyl or anhydride group.

9. A thermoset moulded material obtainable from a cured or partially cured thermosetting resin composition according to any of the Claims 1-8.

10. A thermoset moulded material according to Claim 9, said material comprising in addition to said resin composition at least one filler, pigment, lubricant and/or reinforcement.

11. A thermoset moulded material according to Claim 10, said reinforcement being glass fibres, carbon fibres, aramide fibres and/or organic fibres, such as cellulose.

12. A thermoset moulded material according to any of the Claims 9-11, said material being a moulding powder.

13. A thermoset moulded material according to any of the Claims 9-11, said material being a decorative or industrial laminate.

14. A prepreg formed from a thermoset moulded material as defined in any of Claims 9 - 11 obtainable by partial curing to B-stage of a roll , a sheet, a web, a cloth, threads or cuttings impregnated with a thermosetting resin composition according to any of Claims 1 - 8.

15. A decorative or industrial laminate obtainable by curing at least one prepreg according to Claim 14.

16. A thermoset material according to any of the Claims 9-13, said material being obtainable by resin immersion or infusion, compression transfer, vacuum moulding, transfer moulding, injection moulding, gas assisted injection moulding, structural injection moulding, filament winding, extrusion, rotary moulding, gravity moulding and/or blow moulding.

17. Use of a thermoset moulded material according to any of the Claims 9-13 and 16, for the production of semifinished or finished goods or articles selected from the group consisting of aeronautic goods and articles, nautic goods and articles, chemicals and chemical goods and articles, automotive coatings, automotive goods and articles, sporting goods and articles, leisure and commodity goods and articles, and electric and electronic goods and articles.

18. Use according to Claim 17, said semifinished or finished goods or articles having at least one metal plated or metal clad surface.

## Patentansprüche

1. Hitzehärtbare Harzzusammensetzung, umfassend zumindest zwei hitzehärtbare Harze und gegebenenfalls zusätzlich zumindest ein Härtungsmittel, Katalysator, Inhibitor, Stabilisator, Lösungsmittel und/oder eigenschaftsregulierenden Zusatzstoff, wobei von den hitzehärtbaren Harzen zumindest eines ein verzweigter Epoxid-funktioneller Polyester mit zumindest einer primären oder sekundären Epoxidgruppe und zumindest einer Carboxylgruppe ist, wobei der Epoxid-funktionelle Polyester erhältlich ist aus einem Vorpolymer mit zumindest einer Carboxylgruppe und m Hydroxylgruppen, wobei m eine ganze Zahl von zumindest 3 ist, wobei das Vorpolymer ein Kondensationsprodukt ist, erhalten durch Kondensierung zumindest eines Monomers ausgewählt aus der Gruppe bestehend aus Di-, Tri- oder Polyhydroxyfunktionellen Monocarbonsäuren mit 2 bis 18 Kohlenstoffatomen, gegebenenfalls gefolgt von einer weiteren Kettenverlängerung mittels Addition von zumindest einer Monohydroxy-funktionellen Monocarbonsäure oder Lacton mit 2 bis 24 Kohlenstoffatomen, wobei die Addition durchgeführt wird bei einem Molverhältnis des Kondensationsprodukts zu der Monohydroxy-funktionellen Monocarbonsäure von 1:1 bis zumindest 1:m, wobei das Vorpolymer Epoxy-funktionell gemacht wird durch
a) Reaktion zwischen zumindest einer der Hydroxylgruppen in dem Vorpolymer und zumindest einer monomeren oder polymeren Verbindung, die das Vorpolymer mit zumindest einer Epoxidgruppe versieht, wobei die Reaktion durchgeführt wird bei einem Molverhältnis von Vorpolymer zu der Verbindung von 1:1 bis zumindest 1:m, oder durch
b) Zugabe von zumindest einer ungesättigten Verbindung mit zumindest einer oxidierbaren ungesättigten Gruppe, wobei die ungesättigte Gruppe durch Verwendung von zumindest einem Oxidationsmittel epoxidiert wird, und die Addition durchgeführt wird bei einem Molverhältnis von Vorpolymer zu der ungesättigten Verbindung von 1:1 bis zumindest 1:m,
und wobei von den hitzehärtbaren Harzen zumindest eines ein herkömmliches aliphatisches, cycloaliphatisches oder aromatisches polymeres Epoxid ist, wobei das herkömmliche polymere Epoxid in einer Menge von 1 bis 99 Gew.% vorliegt, bevorzugt 50 bis 95 Gew.%.

2. Hitzehärtbare Harzzusammensetzung gemäß Anspruch 1, worin die Di-, Tri- oder Polyhydroxy-funktionelle Monocarbonsäure 2,2-Dimethylolpropionsäure, α,α-Bis(hydroxymethyl)buttersäure, α,α,α-Tris(hydroxymethyl)essigsäure, α,α-Bis(hydroxymethyl)valeriansäure, α,α-Bis(hydroxy)propionsäure, α,β-Dihydroxypropionsäure und/oder 3,5-Dihydroxybenzoesäure ist.

3. Hitzehärtbare Harzzusammensetzung gemäß Anspruch 1 oder 2, worin die monomere oder polymere Verbindung, die das Vorpolymer mit zumindest einer Epoxidgruppe versieht, ausgewählt ist aus der Gruppe bestehend aus Haloalkyloxiranen.

4. Hitzehärtbare Harzzusammensetzung gemäß Anspruch 3, worin das Haloalkyloxiran ein Halomethyloxiran ist, wie etwa Epichlorhydrin.

5. Hitzehärtbare Harzzusammensetzung gemäß Anspruch 1 oder 2, worin die ungesättigte Verbindung mit zumindest einer oxidierbaren ungesättigten Gruppe eine aliphatische oder cycloaliphatische ungesättigte Monocarbonsäure mit 3 bis 30 Kohlenstoffatomen und zumindest einer oxidierbaren ungesättigten Gruppe ist, wobei die ungesättigte Gruppe durch Verwendung des Oxidationsmittels epoxidiert wird und die Addition mittels Veresterung durchgeführt wird.

6. Hitzehärtbare Harzzusammensetzung gemäß Anspruch 1 oder 2, worin das Oxidationsmittel eine Peroxy- und/oder Haloperoxysäure oder Anhydrid ist.

7. Hitzehärtbare Harzzusammensetzung gemäß einem der Ansprüche 1 bis 6, worin die hitzehärtbare Zusammensetzung zumindest einen Glycidylether eines Kondensationsprodukts zwischen zumindest einem Phenol und zumindest einem Aldehyd oder Keton oder ein Oligomer eines solchen Kondensationsprodukts umfaßt.

8. Hitzehärtbare Harzzusammensetzung gemäß einem der Ansprüche 1 bis 7, worin die hitzehärtbare Harzzusammensetzung zusätzlich zu den besagten Komponenten zumindest ein dendritisches oder hyperverzweigtes Makromolekül umfaßt, bestehend aus einem monomeren oder polymeren Kern mit zumindest einer reaktiven Epoxid- oder Hydroxylgruppe, an die 1 bis 100, bevorzugt 1 bis 20, Generationen bestehend aus zumindest einem monomeren oder polymeren Kettenverlängerer mit zumindest zwei reaktiven Hydroxylgruppen und zumindest einer reaktiven Carboxylgruppe oder zumindest zwei reaktiven Carboxylgruppen und zumindest einer reaktiven Hydroxylgruppe addiert werden, wobei ein Makromolekül erhalten wird mit im wesentlichen Hydroxyl- oder Carboxylgruppen als endständige Gruppen, wobei das Makromolekül ggf. durch Addition zu zumindest einer dieser endständigen Gruppen von zumindest einer monomeren oder polymeren Verbindung versehen wird mit zumindest einer primären oder sekundären Epoxid-, Amino-, Alkenyl- oder Anhydridgruppe.

9. Hitzegehärtetes geformtes Material erhältlich aus einer gehärteten oder teilweise gehärteten hitzehärtbaren Harzzusammensetzung gemäß einem der Ansprüche 1 bis 8.

10. Hitzegehärtetes geformtes Material gemäß Anspruch 9, wobei das Material zusätzlich zu der Harzzusammensetzung zumindest einen Füllstoff, Pigment, Gleitmittel und/oder Verstärkung umfaßt.

11. Hitzegehärtetes geformtes Material gemäß Anspruch 10, wobei die Verstärkung aus Glasfasern, Kohlenfasern, Aramidfasern und/oder organische Fasern, wie etwa Zellulose, besteht.

12. Hitzegehärtetes geformtes Material gemäß einem der Ansprüche 9 bis 11, wobei das Material ein Presspulver ist.

13. Hitzegehärtetes geformtes Material gemäß einem der Ansprüche 9 bis 11, wobei das Material ein dekoratives oder industrielles Laminat ist.

14. Vorimprägnat geformt aus dem hitzegehärteten geformten Material gemäß einem der Ansprüche 9 bis 11, erhältlich durch partielles Aushärten bis zur B-Stufe einer Rolle, einer Platte, eines Netzes, eines Gewebes, eines Garns oder von Spänen, die mit der-hitzehärtbaren Harzzusammensetzung gemäß einem der Ansprüche 1 bis 8 imprägniert sind.

15. Dekoratives oder industrielles Laminat erhältlich durch Aushärten von zumindest einem Vorimprägnat gemäß Anspruch 14.

16. Hitzegehärtetes Material gemäß einem der Ansprüche 9 bis 13, wobei das Material erhältlich ist durch Harz-Eintauchen oder Aufgießen, Drucktransfer, Vakuumformen, Transferformen, Spritzgießen, gasvermitteltes Spritzgießen, strukturelles Spritzgießen, Filamentwickeln, Extrusion, Rotationsformen, Schwerkraftformen und/oder Blasformen.

17. Verwendung des hitzegehärteten geformten Materials gemäß einem der Ansprüche 9 bis 13 und 16 zur Herstellung von halbgefertigten oder gefertigten Waren oder Artikeln, ausgewählt aus der Gruppe bestehend aus aeronautischen Waren und Artikeln, nautischen Waren und Artikeln, Chemikalien und chemischen Waren und Artikeln, Automobilbeschichtungen, Automobilwaren und -artikeln, Sportwaren und -artikeln, Freizeit- und Gebrauchswaren und -artikeln und elektrischen und elektronischen Waren und Artikeln.

18. Verwendung gemäß Anspruch 17, wobei die halbgefertigten oder gefertigten Waren oder Artikel zumindest eine metallplattierte oder metallgekleidete Oberfläche aufweisen.

## Revendications

1. Composition de résines thermodurcissables comprenant au moins deux résines thermodurcissables et éventuellement en plus de celles-ci au moins un agent de cuisson, un catalyseur, un inhibiteur, un stabilisant, un solvant et/ou un additif d'ajustement des propriétés, au moins l'une de ces résines thermodurcissables est un polyester époxyde-fonctionnel ramifié ayant au moins un groupe époxyde primaire ou secondaire et au moins un groupe carboxyle, ledit polyester époxyde-fonctionnel pouvant être obtenu à partir d'un prépolymère ayant au moins un groupe carboxyle et m groupes hydroxyle, m étant un entier d'au moins 3, lequel prépolymère est un produit de condensation obtenu par condensation d'au moins un monomère choisi dans le groupe consistant en les acides monocarboxyliques di-, tri- ou polyhydroxy-fonctionnels ayant 2-18 atomes de carbone, éventuellement suivie par un allongement de chaîne supplémentaire par addition d'au moins un acide, ou lactone, monocarboxylique monohydroxy-fonctionnel ayant 2-24 atomes de carbone, ladite addition étant réalisée à un rapport molaire produit de condensation à acide monocarboxylique monohydroxy-fonctionnel de 1:1 à au moins 1:m, lequel prépolymère est rendu époxyde-fonctionnel par
a) réaction entre au moins l'un desdits groupes hydroxyle dans le prépolymère et au moins un composé monomère ou polymère apportant audit prépolymère au moins un groupe époxyde, la réaction étant conduite à un rapport molaire du prépolymère audit composé de 1:1 à au moins 1:m ou par
b) addition d'au moins un composé insaturé ayant au moins une insaturation oxydable, laquelle insaturation est époxydée au moyen d'au moins un agent oxydant, l'addition étant conduite à un rapport molaire du prépolymère audit composé insaturé de 1:1 à au moins 1:m,
et au moins l'une desdites résines thermodurcissables est un époxyde polymère aliphatique, cycloaliphatique ou aromatique conventionnel, ledit époxyde polymère conventionnel étant présent en une quantité de 1-99 % en masse, de préférence de 50-95 % en masse.

2. Composition de résines thermodurcissables selon la revendication 1 où ledit acide monocarboxylique di-, tri- ou polyhydroxy-fonctionnel est l'acide 2,2-diméthylolpropionique, l'acide α,α-bis-(hydroxyméthyl)butyrique, l'acide α,α,α-tris (hydroxyméthyl)acétique, l'acide α,α-bis(hydroxyméthyl)-valérique, l'acide α,α-bis(hydroxy)propionique, l'acide α,β-dihydroxypropionique et/ou l'acide 3,5-dihydroxybenzoïque.

3. Composition de résines thermodurcissables selon la revendication 1 ou 2 où ledit composé monomère ou polymère apportant au prépolymère au moins un groupe époxyde est choisi dans le groupe consistant en les halogénoalkyloxiranes.

4. Composition de résines thermodurcissables selon la revendication 3 où ledit halogénoalkyloxirane est un halogénométhyloxirane comme l'épichlorhydrine.

5. Composition de résines thermodurcissables selon la revendication 1 ou 2 où ledit composé insaturé ayant au moins une insaturation oxydable est un acide monocarboxylique aliphatique ou cycloaliphatique insaturé ayant 3-30 atomes de carbone et au moins une insaturation oxydable, laquelle insaturation est époxydée au moins dudit agent oxydant, ladite addition étant réalisée par estérification.

6. Composition de résines thermodurcissables selon la revendication 1 ou 2 où ledit agent oxydant est un peroxy- et/ou halogénoperoxyacide ou anhydride.

7. Composition de résines thermodurcissables selon l'une quelconque des revendications 1-6 où ladite composition de résines thermodurcissables comprend au moins un glycidyléther d'un produit de condensation entre au moins un phénol et au moins un aldéhyde ou une cétone ou d'un oligomère d'un tel produit de condensation.

8. Composition de résines thermodurcissables selon l'une quelconque des revendications 1-7 où ladite composition de résine thermodurcissable comprend, en plus desdits composants, au moins une macromolécule dendritique ou hyper-ramifiée composée d'un noyau monomère ou polymère ayant au moins un groupe époxyde ou hydroxyle réactif auquel sont ajoutées 1-100, de préférence 1-20, générations consistant en au moins un agent d'allongement de chaîne monomère ou polymère ayant au moins deux groupes hydroxyle réactifs et au moins un groupe carboxyle réactif ou au moins deux groupes carboxyle réactifs et au moins un groupe hydroxyle réactif, de sorte qu'il se forme une macromolécule ayant essentiellement des groupes hydroxyle ou carboxyle comme fonctions terminales, laquelle macromolécule est munie éventuellement par addition, à au moins l'une desdites fonctions terminales, d'au moins un composé monomère ou polymère d'au moins un groupe époxyde, amino, alcényle ou anhydride primaire ou secondaire.

9. Matériau moulé thermodurci pouvant être obtenu à partir d'une composition de résines thermodurcissables ayant subi une cuisson ou une cuisson partielle selon l'une quelconque des revendications 1-8.

10. Matériau moulé thermodurci selon la revendication 9, ledit matériau comprenant en plus de ladite composition de résines au moins une charge, un pigment, un lubrifiant et/ou un renfort.

11. Matériau moulé thermodurci selon la revendication 10, ledit renfort étant des fibres de verre, des fibres de carbone, des fibres d'aramide et/ou des fibres organiques, comme la cellulose.

12. Matériau moulé thermodurci selon l'une quelconque des revendications 9-11, ledit matériau étant une poudre à mouler.

13. Matériau moulé thermodurci selon l'une quelconque des revendications 9-11, ledit matériau étant un stratifié décoratif ou industriel.

14. Préimprégné formé à partir d'un matériau moulé thermodurci selon l'une quelconque des revendications 9-11 pouvant être obtenu par réticulation partielle jusqu'au stade B d'un rouleau, d'une feuille, d'une nappe, d'un tissu, de fils ou de déchets imprégnés d'une composition de résines thermodurcissables selon l'une quelconque des revendications 1-8.

15. Stratifié décoratif ou industriel pouvant être obtenu par réticulation d'au moins un préimprégné selon la revendication 14.

16. Matériau thermodurci selon l'une quelconque des revendications 9-13, ledit matériau pouvant être obtenu par immersion ou arrosage, transfert par compression, moulage sous vide, moulage par transfert, moulage par injection, moulage par injection assisté par gaz, moulage par injection structural, enroulement filamentaire, extrusion, moulage rotatif, moulage par gravité et/ou soufflage.

17. Utilisation d'un matériau moulé thermodurci selon l'une quelconque des revendications 9-13 et 16 pour la production de produits ou articles semi finis ou finis choisis dans le groupe consistant en les produits et articles aéronautiques, les produits et articles nautiques, les substances chimiques et les produits et articles chimiques, les revêtements pour véhicules automobiles, les produits et articles pour véhicules automobiles, les produits et articles de sport, les produits et articles de loisirs et commerciaux, et les produits et articles électriques et électroniques.

18. Utilisation selon la revendication 17, lesdits produits et articles semifinis ou finis ayant au moins une surface à plaquage métallique ou à garniture métallique.
